# EUROPÄISCHE PATENTSCHRIFT

(11) **EP 3 728 773 B1**
(45) Veröffentlichungstag und Bekanntmachung des Hinweises auf die Patenterteilung: **03.11.2021**
(21) Anmeldenummer: 18833198.7
(22) Anmeldetag: 19.12.2018
(51) Int. Cl.: E05C 19/14, B64D 29/06, E05B 17/10, E05B 1/00

(54) **VERRIEGELUNGSVORRICHTUNG FÜR KLAPPEN AN FLUGZEUGEN**
LOCKING DEVICE FOR FLAPS ON AIRCRAFT
DISPOSITIF DE VERROUILLAGE DESTINÉ À DES TRAPPES SUR DES AVIONS

(30) Priorität: 22.12.2017 DE 102017223684
(43) Veröffentlichungstag der Anmeldung: 28.10.2020
(73) Patentinhaber: Lufthansa Technik AG, 22335 Hamburg (DE)
(72) Erfinder: SUTTER, Wolfgang, 25469 Halstenbek (DE); OLESCH, Martin, 20357 Hamburg (DE)
(74) Vertreter: Glawe, Delfs, Moll
(86) Internationale Anmeldenummer: PCT/EP2018/085757
(87) Internationale Veröffentlichungsnummer: WO 2019/121863

(56) Entgegenhaltungen:
- EP-A1- 1 099 629
- FR-A1- 3 007 390
- US-A- 4 531 769
- US-A- 5 620 212

## Beschreibung

Die Erfindung betrifft eine bündig in eine Oberfläche einlassbare Verriegelungsvorrichtung zur Verriegelung von Klappen o. Ä., insbesondere für Flugzeuge.

Flugzeuge weisen an den Außenflächen häufig eine Vielzahl von Öffnungen auf, welche einem Wartungspersonal den Zugang für dahinterliegende Systeme zum Zwecke der Wartung, Inspektion oder Reparatur ermöglichen. Wartungsöffnungen für nur gelegentlich zu öffnende Zugänge werden regelmäßig durch verschraubte Abdeckungen verschlossen, zu deren Öffnen die Schrauben jeweils vollständig gelöst werden müssen. Für häufiger zu öffnende Wartungsöffnungen werden vielfach mittels Scharnier oder Schwenkmechanismus angeschlagene Klappen bzw. Türen verwendet, welche über Verriegelungsvorrichtungen verfügen, die ohne die Verwendung von Werkzeug geöffnet und geschlossen werden können.

Entsprechende Verriegelungsvorrichtungen, wie sie auch in US 4,531,769 und US 5,620,212 gezeigt sind, können über eine Lasche und einen Verriegelungshaken verfügen, die über einen Mechanismus so miteinander verbunden sind, dass der Verriegelungshaken nach Eingreifen in ein Gegenstück durch Betätigung der Lasche angezogen wird, um eine sichere Verriegelung zu erreichen. In der Regel sind solche Verriegelungsvorrichtungen beweglich bzw. schwenkbar in die Klappe oder Tür integriert, während das erforderliche Gegenstück bzw. Widerlager zur Aufnahme des Verriegelungshakens in der feststehenden Außenhaut des Flugzeugs angebracht ist. Die Verriegelungsvorrichtung kann dabei werkzeugfrei betätigt werden, nämlich indem per Hand die Lasche gesenkt oder angehoben wird und dadurch über den Mechanismus der Verriegelungshaken an seinem Gegenstück eingerastet oder gelöst wird.

Im verriegelten Zustand der Verriegelungsvorrichtung ist die Lasche regelmäßig bündig mit der Außenfläche des Flugzeugs, um so eine möglichst glatte und aerodynamisch störungsfreie Oberfläche am Flugzeug zu erreichen. Im geöffneten Zustand steht die Lasche jedoch in einem bestimmten Winkel von der Außenfläche des Flugzeuges ab, womit den einschlägigen Bauvorschriften für Verkehrsflugzeuge, bspw. FAR 25.783 oder CS 25.783, die eine eindeutige, visuell wahrnehmbare Indikation wenigstens von einigen nicht vollständig verriegelten Klappen oder Türen fordern, entsprochen wird.

Gelegentlich kommt es dennoch vor, dass Verriegelungsvorrichtungen beispielsweise nach Durchführung einer Instandhaltungsmaßnahme und vor Inbetriebnahme des Flugzeugs nicht ordnungsgemäß verriegelt werden. Daraus resultiert die Gefahr, dass Klappen oder Türen sich durch den Luftstrom öffnen und abreißen können, was zu einer Gefährdung des Flugzeugs und seiner Insassen aber auch Dritter am Boden führen kann.

Es ist bekannt, Verriegelungsvorrichtungen in auffälliger Farbe zu lackieren, welche sich von der Farbe der Flugzeugau-ßenfläche unterscheiden und zumeist Tagesleuchtfarben sind. Ein Nachteil dieser Lösung besteht nun darin, dass Tagesleuchtfarben kurzwelliges Licht im UV- oder UV-nahen Bereich benötigen um ihre auffällige Signalwirkung zu erreichen. Diese Beleuchtungsbedingungen sind oftmals nicht vorhanden, beispielsweise bei Abfertigung eines Flugzeuges in der Dämmerung oder Dunkelheit. Auch bei monochromatischer Vorfeldbeleuchtung, bspw. mit Gasentladungslampen, treten die mit Tagesleuchtfarben lackierten Verriegelungsvorrichtungen nicht besonders hervor.

Ein weiterer Nachteil an der Verwendung von Tagesleuchtfarben besteht darin, dass rote oder orange Farbtöne häufig in der Außenbemalung von Flugzeugen, bspw. von feststehenden Antennen oder Drain Masts, verwendet werden, sodass eine gewisse Gewöhnung an diese Farbe stattfindet und sie nicht als besonders auffällig wahrgenommen wird.

Der Nachteil von zusätzlichen Vorrichtungen zur verbesserten Erkennbarkeit von unverriegelten Verriegelungsvorrichtungen besteht im technischen Aufwand für Installation und Wartung, und damit auch in den Kosten und der Zuverlässigkeit solcher Vorrichtungen, sowie in dem Umstand, dass diese in vielen Fällen aus technischen oder wirtschaftlichen Gründen nicht oder nur schwer nachrüstbar sind.

Dieser Erfindung liegt die Aufgabe zugrunde, eine Verriegelungsvorrichtung zur Verriegelung von Klappen mit erhöhter Erkennbarkeit, sowie Verfahren zur Erhöhung der Erkennbarkeit von vorhandenen Verriegelungsvorrichtungen zu schaffen.

Gelöst wird diese Aufgabe durch eine Verriegelungsvorrichtung gemäß dem Hauptanspruch, sowie ein Verfahren gemäß dem Anspruch 12. Vorteilhafte Weiterbildungen sind Gegenstand der abhängigen Ansprüche.

Demnach betrifft die Erfindung eine bündig in eine Oberfläche einlassbare Verriegelungsvorrichtung zur Verriegelung von Klappen, insbesondere für Flugzeuge, umfassend eine Lasche und ein dadurch betätigbares Verriegelungselement, wobei die Lasche im Verriegelungszustand der Verriegelungsvorrichtung bündig mit der Oberfläche ist und im geöffneten Zustand aus der Oberfläche hervorsteht, und wobei wenigstens ein Teil der Flächen der Verriegelungsvorrichtung, die im Verriegelungszustand gegenüber der Oberfläche innen liegend und im geöffneten Zustand sichtbar sind, mit fotolumineszentem Material beschichtet ist.

Die Erfindung betrifft weiterhin ein Verfahren zur Nachrüstung einer bündig in eine Oberfläche einlassbare Verriegelungsvorrichtung umfassend eine Lasche und ein dadurch betätigbares Verriegelungselement, wobei die Lasche im Verriegelungszustand der Verriegelungsvorrichtung bündig mit der Oberfläche ist und im geöffneten Zustand aus der Oberfläche hervorsteht, wobei wenigstens ein Teil der Flächen der Verriegelungsvorrichtung, die im Verriegelungszustand gegenüber der Oberfläche innen liegend und nur im geöffneten Zustand sichtbar sind, mit fotolumineszentem Material beschichtet werden.

Der Erfindung liegt die Erkenntnis zugrunde, dass eine Beschichtung mit fotolumineszentem Material zumindest derjenigen Flächen, die im geöffneten Zustand der Verriegelungsvorrichtung sichtbar sind, die Erkennbarkeit des geöffneten Zustands einer Verriegelungsvorrichtung unter verschieden Umgebungsbedingungen, insbesondere in Dämmerung und bei Nacht, deutlich erhöht werden kann.

Fotolumineszente Beschichtungen weisen regelmäßig eine gelbe, blaugrüne oder rote Eigenfarbe auf, die bei Tageslicht gut erkennbar ist. Dabei kann die Eigenfarbe so gewählt werden, dass sich ein möglichst großer Kontrast zu der Farbe der die Verriegelungsvorrichtung umgebenen Oberfläche ergibt. Bei einer ansonsten roten oder rötlichen Oberfläche kann bspw. eine fotolumineszente Beschichtung mit gelber Eigenfarbe gewählt werden, bei einer im wesentlichen weißen Oberfläche eine Beschichtung mit roter Eigenfarbe.

Während Dämmerung oder Dunkelheit ist die fotolumineszente Beschichtung ebenfalls gut sichtbar, da sie zuvor aufgenommene Strahlungsenergie als sichtbares Licht in einer bestimmten Lichtfarbe abgeben und somit praktisch nachleuchten. Während in der Dämmerung bereits das noch vorhandene Umgebungslicht ausreichend sein kann, um die fotolumineszente Eigenschaft der Beschichtung zu aktivieren, sodass diese in ihrer Leuchtfarbe zu leuchten beginnt und damit gut erkennbar ist, liegt der Erfindung insbesondere in Bezug auf Dunkelheit die Erkenntnis zugrunde, dass zur Sicherung von Klappen verwendete Verriegelungsvorrichtungen regelmäßig nur zu Wartungszwecken geöffnet werden. Nach dem Öffnen der Verriegelungsvorrichtung und Öffnen der entsprechenden Klappe werden also an den dadurch für gewöhnlich verdeckten Elementen Wartungsarbeiten durchgeführt, wofür grundsätzlich für ausreichende Beleuchtung gesorgt wird. Diese Beleuchtung ist regelmäßig ausreichend, um die fotolumineszente Beschichtung aufzuladen, sodass diese auch nach Beendigung der Wartungsarbeiten und damit verbundenem Wegfall der Beleuchtung noch nachleuchten und somit gut erkannt werden können.

Da fotolumineszente Beschichtungen in der Regel die gespeicherte Energie in Form von Licht in einer anderen Wellenlänge als die für das Aufladen der Beschichtung absorbierte Wellenlänge abgeben, kann - bei entsprechender Wahl des Fotolumineszenzmaterials - erreicht werden, dass die Beschichtung durch eine monochromatische oder zumindest nicht das gesamte Spektrum des sichtbaren Lichts aussendende Vorfeldbeleuchtung - bspw. über Natriumdampflampen oder LED-Beleuchtung - aktiviert wird und Licht in einer von dem ggf. Licht der Vorfeldbeleuchtung abweichenden Wellenlänge abgegeben wird, womit die fotolumineszente Beschichtung auch unter solchen Bedingungen gut erkennbar ist.

Es ist möglich, dass auch diejenige Außenseite der Verriegelungsvorrichtung, die im geschlossenen Zustand mit der umgebenen Oberfläche bündig und sichtbar ist, eine fotolumineszente Beschichtung aufweist. In diesem Fall ist die Verriegelungsvorrichtung auch im geschlossenen Zustand in verschiedenen Beleuchtungssituation gut erkennbar. Um dabei eine gute Erkennbarkeit des Öffnungszustandes der Verriegelungsvorrichtung sicherzustellen, ist bevorzugt, wenn die Beschichtung auf der Außenseite der Verriegelungsvorrichtung eine andere Eigenfarbe und/oder Leuchtfarbe als die Beschichtung auf den nur im geöffneten Zustand sichtbaren Flächen aufweist. Durch den Farbunterschied ist weiterhin gut erkennbar, ob eine Verriegelungsvorrichtung geöffnet oder geschlossen ist.

Die fotolumineszente Beschichtung weist vorzugsweise einen Mehrschichtaufbau umfassend eine Reflexionsschicht, eine Fotolumineszenzschicht und eine transluzente, vorzugsweise transparente, Deckschicht zum Schutz vor Beschädigungen der darunterliegenden Schichten auf.

Die Beschichtung kann durch sequenzielles Auftragen der einzelnen Schichten auf die dafür vorgesehenen Flächen der Verriegelungsvorrichtung aufgetragen werden. So kann zunächst eine Reflexionsschicht, anschließend eine Fotolumineszenzschicht und abschließend eine transluzente Deckschicht aufgetragen werden. Hierbei kann auf gängige Lackierverfahren wie Tauchen, Streichen, Rollen, Gießen oder Spritzen zurückgegriffen werden.

Alternativ dazu ist es möglich, die Beschichtung als mehrschichtiges Beschichtungselement vorzufertigen, welche dann auf die dafür vorgesehenen Flächen aufgeklebt ist. Dazu ist wenigstens eine der Schichten des Beschichtungselements als Folie ausgeführt, auf welche die anderen Schichten aufgebracht sind, bspw. durch Lackierverfahren oder durch Stoffschluss mit weiteren als Folien ausgeführten Schichten. Um die Anbringung eines solchen Beschichtungselementes am Verschlusselement zu erleichtern, kann das Beschichtungselement eine Klebeschicht umfassen, sodass das Beschichtungselement ähnlich einem Aufkleber am Verschlusselement befestigt werden kann.

Es ist bevorzugt, wenn die Reflexionsschicht einen Reflexionsgrad von mehr als 75 % aufweist und/oder die Fotolumineszenzschicht einen Gewichtsanteil an Leuchtpigmenten von 15 % bis 75 %, vorzugsweise von 20 % bis 45 % oder 40 % bis 75 % aufweist.

Es ist bevorzugt, wenn die Dicke der Beschichtung kleiner 1 mm, vorzugsweise kleiner 0,75 mm, weiter vorzugsweise zwischen 0,15 mm und 0,5 mm ist. Bei einer entsprechend geringen Dicke der Beschichtung kann diese häufig an bereits vorhandene Verriegelungsvorrichtungen angebracht werden, ohne dass die Verriegelungsvorrichtungen dafür verändert werden müssten.

Die erfindungsgemäß vorgesehene Fotolumineszenz der Beschichtung kann bspw. durch Zink-Sulfid-Verbindungen und/oder Strontium-Aluminat-Verbindung erreicht werden, die im Regelfall Strahlung im Wellenlängenbereich von 250 nm bis 500 nm absorbieren und Licht häufig bei einer Wellenlänge zwischen 450 nm bis 650 nm abgeben.

Es ist bevorzugt, die für die Fotolumineszenz verwendete Verbindung und deren Gewichtsanteil an der Beschichtung (oder der Fotolumineszenzschicht) so zu wählen, dass die resultierende Leuchtdichte 50 mcd/m^2, vorzugsweise 100 mcd/m^2 nach 10 Minuten Beleuchtung gemäß DIN 67510 beträgt. Besonders bevorzugt ist es, wenn die Leuchtdichte der Beschichtung 50 mcd/m^2 nach 10 Minuten Aufladung mit 100 Lux, weiter vorzugsweise die Leuchtdichte der Beschichtung 75 mcd/m^2 nach 10 Minuten Aufladung mit 75 Lux beträgt. Ein Fachmann ist mit vertretbarem Aufwand in der Lage, eine Beschichtung gemäß diesen Vorgaben aufzufinden.

Es ist bevorzugt, wenn die Beschichtung für einen Temperaturbereich -55 °C bis +60 °C und/oder einen Temperaturgradienten 1 °C/s ausgebildet ist.

Zur Erläuterung des erfindungsgemäßen Verfahrens wird auf die vorstehenden Ausführungen verwiesen.

Die Erfindung wird nun anhand bevorzugter Ausführungsformen unter Bezugnahme auf die beigefügten Zeichnungen beispielhaft beschrieben. Es zeigen:
- Figur 1:: ein erstes Ausführungsbeispiel einer erfindungsgemäßen Verriegelungsvorrichtung im Einbauzustand;
- Figur 2:: eine Detaildarstellung der Verriegelungsvorrichtungen aus Figur 1;
- Figur 3:: eine Ausführungsvariante zu der Verriegelungsvorrichtungen aus Figuren 1 und 2;
- Figur 4:: ein schematischer Querschnitt durch ein erstes Ausführungsbeispiel des Aufbaus der fotolumineszenten Beschichtung gemäß Figur 2 oder 3; und
- Figur 5:: ein schematischer Querschnitt durch ein zweites Ausführungsbeispiel des Aufbaus der fotolumineszenten Beschichtung gemäß Figur 2 oder 3.

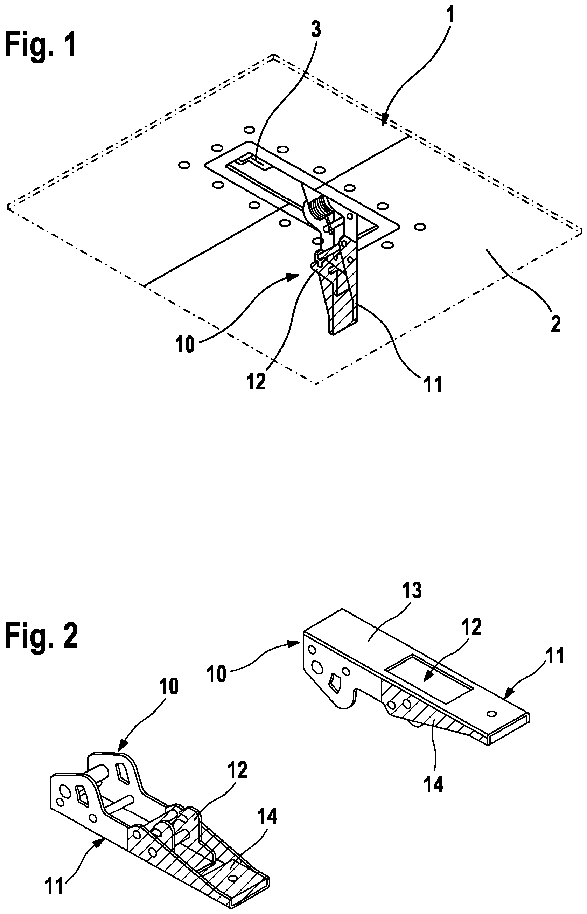

In Figur 1 ist ein Teil der Außenfläche 1 eines Flugzeuges dargestellt, bei dem eine einseitig angeschlagene und damit schwenkbare Klappe 2 einen Teil der Außenfläche 1 bildet. Die Klappe 2 kann durch die Verriegelungsvorrichtung 10 im dargestellten, geschlossenen Zustand wahlweise gesichert werden.

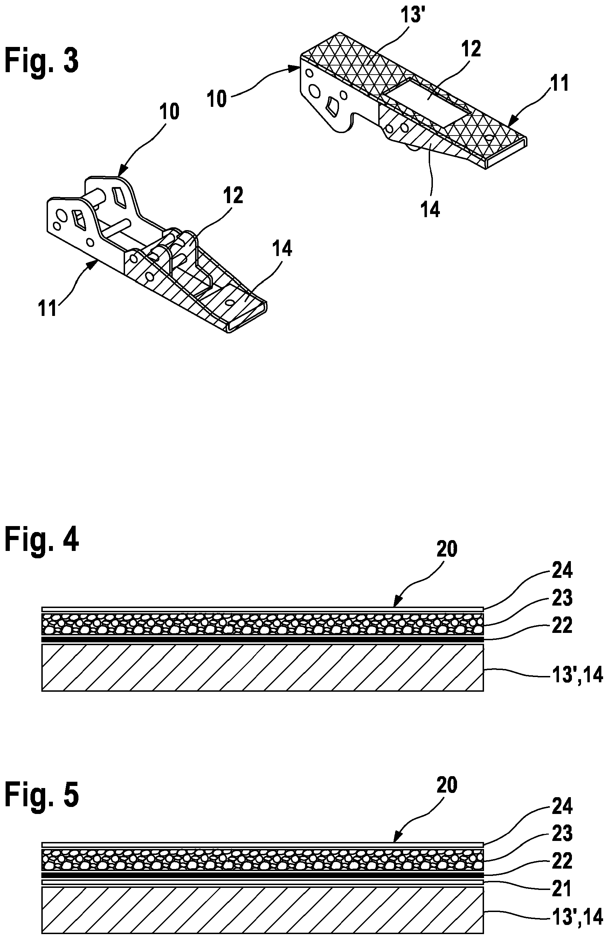

Dazu weist die Verriegelungsvorrichtung 10 eine schwenkbaren Lasche 11 auf, an der ein als Haken ausgebildetes Verriegelungselement 12 angeordnet ist. Die Lasche 11 lässt sich von dem in Figur 1 dargestellten geöffneten Zustand, in dem sie aus der Außenfläche 1 hervor steht, derart verschwenken, dass sie bündig mit der Außenfläche 1 ist. In diesem geschlossenen Zustand greift das Verriegelungselement 12 in ein Gegenstück 3 am feststehenden Teil der Außenfläche 1 ein, um so die Klappe 2 im geschlossenen Zustand zu sichern. Das Verriegelungselement 12 ist auch im geschlossenen Zustand von außen durch ein Fenster in der Lasche 11 zugänglich (vgl. Figuren 2 und 3) und kann so bei Bedarf entriegelt werden. Insoweit entspricht die Verriegelungsvorrichtung 10 dem Stand der Technik.

In Figur 2 ist die Verriegelungsvorrichtung 10 aus Figur 1 isoliert in zwei Ansichten dargestellt.

Die Verrieglungsvorrichtung 10 und insbesondere die Lasche 11 weisen lackierte Flächen 13 auf, die im geschlossenen Zustand bündig mit der Außenfläche 1 sind. Diese können in der Farbe der Außenfläche 1 oder einer Tagesleuchtfarbe lackiert sein. Andere - in Figur 2 schraffiert markierte - Flächen 14 des Verriegelungselementes 10, die zwar in dem in Figur 1 dargestellten geöffneten Zustand des Verriegelungselementes 10 sichtbar sind, im Verriegelungszustand jedoch innen liegend und also nicht sichtbar bzw. von den Flächen 13 und der Außenfläche 1 verdeckt sind, sind mit einem fotolumineszenten Material beschichtet. Sowohl die Eigenfarbe als auch die Leuchtfarbe des fotolumineszenten Materials sind so gewählt, dass sich sowohl bei Tageslicht als auch bei Dämmerung oder Dunkelheit, bei dem das fotolumineszente Material nachleuchtet, ein möglichst großer Kontrast gegenüber der Farbe der Außenfläche 1 ergibt.

In Figur 3 ist eine alternative Ausführungsvariante zu der Verriegelungsvorrichtung 10 gemäß Figuren 1 und 2 in einer zu Figur 2 identischen isolierten Darstellung gezeigt.

Bei der Ausführungsvariante gemäß Figur 3 ist diejenige Fläche 13` der Lasche 11, die im geschlossenen Zustand bündig mit der Außenfläche 1 sind, ebenfalls mit einem fotolumineszenten Material beschichtet. Sowohl die Eigenfarbe als auch die Leuchtfarbe des fotolumineszenten Materials auf der Fläche 13` ist dabei unterschiedliche zu denjenigen des fotolumineszenten Materials auf den im Verriegelungszustand innen liegenden Flächen 14.

Da die durch das Verriegelungselement 10 gesicherte Klappe 2 lediglich geöffnet wird, um an dahinterliegende Komponenten des Flugzeuges bspw. zu Wartungszwecken ö. Ä. zu gelangen, wird das Verriegelungselement 10 bei Dunkelheit grundsätzlich nur unter ausreichender künstlicher Beleuchtung geöffnet, die regelmäßig ausreichend ist, das fotolumineszente Material auf den Flächen 14 aufzuladen, sodass die Flächen 14 selbst nach Wegfall der künstlichen Beleuchtung - bspw. weil die Wartungsarbeiten abgeschlossen sind - nachleuchten. Nicht ordnungsgemäß verriegelte Verriegelungsvorrichtungen 10 sind auch bei Dunkelheit so gut erkennbar.

Bei Beleuchtungsszenarien mit einem monochromatischen Licht - bspw. einer Vorfeldbeleuchtung mit Gasentladungslampen - kann das fotolumineszente Material auf den Flächen 14 - und ggf. auch auf der Fläche 13` - Licht in einer anderen Wellenlänge als die monochromatische Beleuchtung abgeben, sodass der Verriegelungszustand einer Verriegelungsvorrichtung 10 gut erkennbar ist.

Bei Tageslicht ist die Erkennbarkeit des Verriegelungszustandes einer Verriegelungsvorrichtung 10 aufgrund der im Kontrast zu der umgebenen Außenfläche 1 gewählten Eigenfarbe des fotolumineszenten Materials auf den Flächen 14 - und ggf. auch auf der Fläche 13` - vergleichbar zu den mit Tagesleuchtfarben markierten Verriegelungsvorrichtungen gemäß dem Stand der Technik gegeben.

In Figur 4 ist ein erster möglicher Mehrschichtaufbau der Beschichtung 20 mit fotolumineszenten Material auf den Flächen 13` und/oder 14 der Verriegelungsvorrichtung 10 gezeigt, wobei die in Figur 4 gezeigte Beschichtung 20 durch sequenzielles Auftragen der einzelnen Schichten 22, 23 ,24 auf die jeweiligen Flächen 13`, 14 geschaffen wird.

Die Beschichtung 20 umfasst als unterste, der Fläche 13`, 14 nächstliegenden Schicht eine Reflexionsschicht 22 mit einem Reflexionsgrad von mehr als 75% und einer Schichtdicke von 10 µm bis 100 µm.

Auf dieser Reflexionsschicht 22 befindet sich eine Fotolumineszenzschicht 23 umfassend einen Gewichtsanteil von 20 % bis 45 % einer fotolumineszenten Strontium-Aluminat-Verbindung. Die Strontium-Aluminat-Verbindung ist derart gewählt, dass sie nach 10 Minuten Beleuchtung gemäß DIN 67510 eine Leuchtdichte von 100 mcd/m^2 aufweist und außerdem innerhalb des Temperaturbereichs von -55 °C und +60 °C sowie einem Temperaturgradienten von 1 °C/s keinen Schaden nimmt. Die Dicke der Fotolumineszenzschicht beträgt ca. 100 µm bis 400 µm.

Abschließend ist eine transparente Deckschicht 24, beispielsweise aus einem Lack basierend auf Polyurethan oder Acrylat, vorgesehen, mit der die Fotolumineszenzschicht 23 vor Abrasion und sonstiger Beschädigung geschützt wird. Aufgrund der Transparenz dieser Schicht 24 wird die Fotolumineszenz der darunterliegenden Schicht 23 nicht beeinträchtigt. Die Deckschicht 24 hat eine Dicke von ca. 5µm bis 50µm.

Die einzelnen Schichten 22, 23 ,24 lassen sich mit einem beliebigen gängigen Lackierverfahren, wie bspw. Tauchen, Streichen, Rollen, Gießen oder Spritzen, auftragen, wobei insbesondere auch das nachträgliche Auftragen auf bereits in Verwendung befindliche Verriegelungselemente 10 möglich ist. Es ist so möglich, bereits vorhandene Verriegelungselemente 10 erfindungsgemäß nachzurüsten.

In Figur 5 ist ein alternativer Mehrschichtaufbau der Beschichtung 20 dargestellt. In diesem Ausführungsbeispiel ist die Beschichtung 20 mit all ihren Schichten 21-24 als Beschichtungselement 20` ausgestaltet, welches durch einen einfachen Klebeschritt auf eine Fläche 13`, 14 aufgebracht wird.

Die unterste Schicht 21 des Beschichtungselements 20` ist eine Klebeschicht 21, mit der das Beschichtungselements 20` einfach auf einer Fläche 13`, 14 vergleichbar einem Aufkleber aufgeklebt werden kann. Die Klebeschicht 21 ist dabei als Folie ausgestaltet, wodurch das gesamte Beschichtungselement 20` als Folie zu handhaben ist.

Auf die als Folie ausgestaltete Klebeschicht 21 sind vergleichbar zu der Ausführungsvariante gemäß Figur 4 eine Reflexionsschicht 22, eine Fotolumineszenzschicht 23 und eine Deckschicht 24 aufgetragen. Die einzelnen Schichten können bspw. im Siebdruckverfahren auf die Klebeschicht-Folie 21 aufgetragen werden. Zur Erläuterung der Eigenschaften der einzelnen Schichten 22, 23, 24 auf die vorstehenden Ausführungen zu Figur 4 verwiesen.

Die Dicke des Beschichtungselementes 20` umfassend sämtliche Schichten 21-24 beträgt 300 µm bis 800 µm. Die Ausgestaltung der Beschichtung 20 als Beschichtungselement 20` ermöglich die Beschichtung einer Verriegelungsvorrichtung 10 auch unter solchen Umgebungsbedingungen, welche einen unmittelbaren Auftrag, wie in Zusammenhang mit Figur 4 erläutert, nicht zulassen.

## Patentansprüche

1. Bündig in eine Oberfläche (1) einlassbare Verriegelungsvorrichtung (10) zur Verriegelung von Klappen (2), insbesondere für Flugzeuge, umfassend eine Lasche (11) und ein dadurch betätigbares Verriegelungselement (12), wobei die Lasche (11) im Verriegelungszustand der Verriegelungsvorrichtung (10) bündig mit der Oberfläche (1) ist und im geöffneten Zustand aus der Oberfläche (1) hervorsteht, **dadurch gekennzeichnet, dass**
wenigstens ein Teil der Flächen (14) der Verriegelungsvorrichtung (10), die im Verriegelungszustand gegenüber der Oberfläche (1) innen liegend und nur im geöffneten Zustand sichtbar sind, mit fotolumineszentem Material beschichtet ist.

2. Verriegelungsvorrichtung (10) nach Anspruch 1,
**dadurch gekennzeichnet, dass**
die Außenseite (13`) der Verriegelungsvorrichtung (10) eine fotolumineszente Beschichtung (20) aufweist, wobei die Eigenfarbe und/oder Leuchtfarbe dieser fotolumineszenten Beschichtung (20) von derjenigen nur im geöffneten Zustand der Verriegelungsvorrichtung (10) sichtbaren Flächen (14) abweicht.

3. Verriegelungsvorrichtung (10) nach einem der vorhergehenden Ansprüche,
**dadurch gekennzeichnet, dass**
die Beschichtung (20) mit fotolumineszentem Material einen Mehrschichtaufbau umfassend eine Reflexionsschicht (22), eine Fotolumineszenzschicht (23) und eine transluzente Deckschicht (24) aufweist.

4. Verriegelungsvorrichtung (10) nach Anspruch 3,
**dadurch gekennzeichnet, dass**
die Beschichtung (20) durch sequenzielles Auftragen der einzelnen Schichten (22, 23, 24) auf die dafür vorgesehenen Flächen (13`, 14) der Verriegelungsvorrichtung (10) aufgetragen ist.

5. Verriegelungsvorrichtung (10) nach Anspruch 3,
**dadurch gekennzeichnet, dass**
die Beschichtung (20) durch ein mehrschichtiges Beschichtungselement (20') mit wenigstens einer als Folie ausgeführten Schicht, welches auf die dafür vorgesehenen Flächen aufgeklebt ist, geschaffen ist.

6. Verriegelungsvorrichtung (10) nach Anspruch 5,
**dadurch gekennzeichnet, dass**
das Beschichtungselement (20') eine Klebeschicht (21) umfasst.

7. Verriegelungsvorrichtung (10) nach einem der Ansprüche 3 bis 6,
**dadurch gekennzeichnet, dass**
die Reflexionsschicht (22) einen Reflexionsgrad von mehr als 75 % aufweist und/oder die Fotolumineszenzschicht (23) einen Gewichtsanteil an Leuchtpigmenten von 15 % bis 75 %, vorzugsweise von 20 % bis 45 % oder 40 % bis 75 % aufweist.

8. Verriegelungsvorrichtung (10) nach einem der vorhergehenden Ansprüche,
**dadurch gekennzeichnet, dass**
die Dicke der Beschichtung (20) kleiner 1 mm, vorzugsweise kleiner 0,75 mm, weiter vorzugsweise zwischen 0,15 mm und 0,5 mm ist.

9. Verriegelungsvorrichtung (10) nach einem der vorhergehenden Ansprüche,
**dadurch gekennzeichnet, dass**
die Beschichtung (20) Zink-Sulfid-Verbindungen und/oder Strontium-Aluminat-Verbindungen umfasst.

10. Verriegelungsvorrichtung (10) nach einem der vorhergehenden Ansprüche,
**dadurch gekennzeichnet, dass**
die Beschichtung (20) eine Leuchtdichte von 50 mcd/m^2, vorzugsweise von 100 mcd/m^2 nach 10 Minuten Beleuchtung gemäß DIN 67510 und/oder eine Leuchtdichte von 50 mcd/m^2 nach 10 Minuten Aufladung mit 100 Lux, weiter vorzugsweise von 75 mcd/m^2 nach 10 Minuten Aufladung mit 75 Lux aufweist.

11. Verriegelungsvorrichtung (10) nach einem der vorhergehenden Ansprüche,
**dadurch gekennzeichnet, dass**
die Beschichtung (20) für einen Temperaturbereich -55 °C bis +60 °C und/oder einen Temperaturgradienten 1 °C/s ausgebildet ist.

12. Verfahren zur Nachrüstung einer bündig in eine Oberfläche (1) einlassbare Verriegelungsvorrichtung (10) umfassend eine Lasche (11) und ein dadurch betätigbares Verriegelungselement (12), wobei die Lasche (11) im Verriegelungszustand der Verriegelungsvorrichtung (10) bündig mit der Oberfläche (1) ist und im geöffneten Zustand aus der Oberfläche (1) hervorsteht,
**dadurch gekennzeichnet, dass**
wenigstens ein Teil der Flächen (14) der Verriegelungsvorrichtung (10), die im Verriegelungszustand gegenüber der Oberfläche (1) innen liegend und nur im geöffneten Zustand sichtbar sind, mit fotolumineszentem Material beschichtet werden.

13. Verfahren nach Anspruch 12,
**dadurch gekennzeichnet, dass**
die Beschichtung (20) durch sequenzielles Auftragen einzelner Schichten (22, 23, 24) auf die dafür vorgesehenen Flächen (14) der Verriegelungsvorrichtung (10) aufgetragen wird.

14. Verfahren nach Anspruch 12,
**dadurch gekennzeichnet, dass**
vorgefertigtes mehrschichtiges Beschichtungselement (20`) als Beschichtung (20) auf die dafür vorgesehenen Flächen (14) aufgeklebt wird.

15. Verfahren nach einem der Ansprüche 12 bis 14,
**dadurch gekennzeichnet, dass**
die nachgerüstete Verriegelungsvorrichtung (10) eine Verriegelungsvorrichtung (10) gemäß einem der Ansprüche 1 bis 11 ist.

## Claims

1. Locking device (10) which can be embedded flush into a surface (1) and is intended for locking flaps (2), in particular for aircraft, comprising a plate (11) and a locking element (12) which can be actuated thereby, wherein, in the locked state of the locking device (10), the plate (11) is flush with the surface (1) and, in the open state, projects from the surface (1),
**characterized in that**
at least some of the faces (14) of the locking device (10) which are situated on the inside with respect to the surface (1) in the locked state and are visible only in the open state are coated with photoluminescent material.

2. Locking device (10) according to Claim 1,
**characterized in that**
the outer side (13') of the locking device (10) has a photoluminescent coating (20), wherein the natural color and/or luminous color of this photoluminescent coating (20) differs from that of faces (14) that are visible only in the open state of the locking device (10) .

3. Locking device (10) according to any of the preceding claims,
**characterized in that**
the coating (20) with photoluminescent material has a multilayer construction comprising a reflective layer (22), a photoluminescent layer (23) and a translucent top layer (24).

4. Locking device (10) according to Claim 3, **characterized in that**
the coating (20) is applied by sequential application of the individual layers (22, 23, 24) to the faces (13', 14) of the locking device (10) which are provided for this purpose.

5. Locking device (10) according to Claim 3, **characterized in that**
the coating (20) is created by means of a multilayer coating element (20') having at least one layer embodied as a film, which is adhesively bonded onto the faces provided for this purpose.

6. Locking device (10) according to Claim 5,
**characterized in that**
the coating element (20') comprises an adhesive layer (21) .

7. Locking device (10) according to any of Claims 3 to 6,
**characterized in that**
the reflective layer (22) has a reflectance of more than 75%, and/or the photoluminescent layer (23) has a proportion by weight of luminescent pigments of 15% to 75%, preferably of 20% to 45% or 40% to 75%.

8. Locking device (10) according to any of the preceding claims,
**characterized in that**
the thickness of the coating (20) is less than 1 mm, preferably less than 0.75 mm, as a further preference between 0.15 mm and 0.5 mm.

9. Locking device (10) according to any of the preceding claims,
**characterized in that**
the coating (20) comprises zinc sulfide compounds and/or strontium aluminate compounds.

10. Locking device (10) according to any of the preceding claims,
**characterized in that**
the coating (20) has a luminance of 50 mcd/m^2, preferably of 100 mcd/m^2 after 10 minutes of illumination in accordance with DIN 67510 and/or a luminance of 50 mcd/m^2 after 10 minutes of charging at 100 lux, as a further preference of 75 mcd/m^2 after 10 minutes of charging at 75 lux.

11. Locking device (10) according to any of the preceding claims,
**characterized in that**
the coating (20) is designed for a temperature range of -55°C to +60°C and/or a temperature gradient of 1°C/s.

12. Method for retrofitting a locking device (10) which can be embedded flush into a surface (1), comprising a plate (11) and a locking element (12) which can be actuated thereby, wherein, in the locked state of the locking device (10), the plate (11) is flush with the surface (1) and, in the open state, projects from the surface (1),
**characterized in that**
at least some of the faces (14) of the locking device (10) which are situated on the inside with respect to the surface (1) in the locked state and are visible only in the open state are coated with photoluminescent material.

13. Method according to Claim 12,
**characterized in that**
the coating (20) is applied by sequential application of individual layers (22, 23, 24) to the faces (14) of the locking device (10) which are provided for this purpose.

14. Method according to Claim 12,
**characterized in that**
pre-produced multilayer coating element (20') is adhesively bonded as a coating (20) onto the faces (14) provided for this purpose.

15. Method according to any of Claims 12 to 14, **characterized in that**
the retrofitted locking device (10) is a locking device (10) according to any of Claims 1 to 11.

## Revendications

1. Dispositif de verrouillage (10) pouvant être inséré en affleurement dans une surface (1) pour le verrouillage de volets (2), notamment pour des aéronefs, comprenant une languette (11) et un élément de verrouillage (12) actionnable par celle-ci, la languette (11) étant en affleurement avec la surface (1) dans l'état de verrouillage du dispositif de verrouillage (10) et dépassant de la surface (1) dans l'état ouvert,
**caractérisé en ce que**
au moins une partie des faces (14) du dispositif de verrouillage (10), qui se situent à l'intérieur par rapport à la surface (1) dans l'état de verrouillage et sont visibles uniquement dans l'état ouvert, est revêtue de matériau photoluminescent.

2. Dispositif de verrouillage (10) selon la revendication 1,
**caractérisé en ce que**
le côté extérieur (13') du dispositif de verrouillage (10) comprend un revêtement photoluminescent (20), la couleur propre et/ou la couleur lumineuse de ce revêtement photoluminescent (20) différant de celle des faces (14) visibles uniquement dans l'état ouvert du dispositif de verrouillage (10).

3. Dispositif de verrouillage (10) selon l'une quelconque des revendications précédentes,
**caractérisé en ce que**
le revêtement (20) de matériau photoluminescent présente une structure multicouche comprenant une couche de réflexion (22), une couche de photoluminescence (23) et une couche de recouvrement translucide (24).

4. Dispositif de verrouillage (10) selon la revendication 3,
**caractérisé en ce que**
le revêtement (20) est appliqué par application séquentielle des couches individuelles (22, 23, 24) sur les faces (13', 14) prévues pour cela du dispositif de verrouillage (10).

5. Dispositif de verrouillage (10) selon la revendication 3,
**caractérisé en ce que**
le revêtement (20) est créé par un élément de revêtement multicouche (20'), muni d'au moins une couche réalisée sous la forme d'un film, qui est collé sur les faces prévues pour cela.

6. Dispositif de verrouillage (10) selon la revendication 5,
**caractérisé en ce que**
l'élément de revêtement (20') comporte une couche adhésive (21).

7. Dispositif de verrouillage (10) selon l'une quelconque des revendications 3 à 6,
**caractérisé en ce que**
la couche de réflexion (22) présente un degré de réflexion de plus de 75 % et/ou la couche de photoluminescence (23) présente une proportion en poids de pigments luminescents de 15 % à 75 %, de préférence de 20 % à 45 % ou 40 % à 75 %.

8. Dispositif de verrouillage (10) selon l'une quelconque des revendications précédentes,
**caractérisé en ce que**
l'épaisseur du revêtement (20) est inférieure à 1 mm, de préférence inférieure à 0,75 mm, de manière davantage préférée comprise entre 0,15 mm et 0,5 mm.

9. Dispositif de verrouillage (10) selon l'une quelconque des revendications précédentes,
**caractérisé en ce que**
le revêtement (20) comporte des composés de sulfure de zinc et/ou des composés d'aluminate de strontium.

10. Dispositif de verrouillage (10) selon l'une quelconque des revendications précédentes,
**caractérisé en ce que**
le revêtement (20) présente une densité lumineuse de 50 mcd/m², de préférence de 100 mcd/m² après 10 minutes d'éclairage selon DIN 67510 et/ou une densité lumineuse de 50 mcd/m² après 10 minutes de chargement avec 100 lux, de manière davantage préférée de 75 mcd/m² après 10 minutes de chargement avec 75 lux.

11. Dispositif de verrouillage (10) selon l'une quelconque des revendications précédentes,
**caractérisé en ce que**
le revêtement (20) est configuré pour une plage de température allant de -55 °C à +60 °C et/ou un gradient de température de 1 °C/s.

12. Procédé d'installation ultérieure d'un dispositif de verrouillage (10) pouvant être inséré en affleurement dans une surface (1), comprenant une languette (11) et un élément de verrouillage (12) actionnable par celle-ci, la languette (11) étant en affleurement avec la surface (1) dans l'état de verrouillage du dispositif de verrouillage (10) et dépassant de la surface (1) dans l'état ouvert, **caractérisé en ce que**
au moins une partie des faces (14) du dispositif de verrouillage (10), qui se situent à l'intérieur par rapport à la surface (1) dans l'état de verrouillage et sont visibles uniquement dans l'état ouvert, est revêtue de matériau photoluminescent.

13. Procédé selon la revendication 12,
**caractérisé en ce que**
le revêtement (20) est appliqué par application séquentielle de couches individuelles (22, 23, 24) sur les faces (14) prévues pour cela du dispositif de verrouillage (10).

14. Procédé selon la revendication 12,
**caractérisé en ce que**
un élément de revêtement multicouche préfabriqué (20') est collé en tant que revêtement (20) sur les faces (14) prévues pour cela.

15. Procédé selon l'une quelconque des revendications 12 à 14,
**caractérisé en ce que**
le dispositif de verrouillage installé ultérieurement (10) est un dispositif de verrouillage (10) selon l'une quelconque des revendications 1 à 11.
